# EUROPEAN PATENT APPLICATION

(11) **EP 4 559 433 A1**
(43) Date of publication of application: **28.05.2025**
(21) Application number: 23211732.5
(22) Date of filing: 23.11.2023
(51) Int. Cl.: A61C 17/02

(54) **MICRO-TUBE APPARATUS**

(71) Applicant: Koninklijke Philips N.V., 5656 AG Eindhoven (NL)
(72) Inventor: BOURQUIN, Yannyk Parulian Julian, Eindhoven (NL); VISSER, Cornelis, Eindhoven (NL); LIPSCH, Job, 5656AG Eindhoven (NL); ALLENDE FRITSCH, Paula Andrea, Eindhoven (NL); FRACKOWIAK, Bruno, Eindhoven (NL); DE VREEDE, Jasper, Eindhoven (NL)
(74) Representative: Philips Intellectual Property & Standards

(57) **Abstract**

Proposed concepts thus aim to provide schemes, solutions, concept, designs, methods and systems pertaining to a micro-tube apparatus for use with a fluid-based floss system. In particular, embodiments aim to provide a micro-tube apparatus for use with a fluid-based floss system by providing an elongate micro-tube with at least one lateral opening in a side of the micro-tube. In other words, it is proposed that by providing an elongate micro-tube with at least one lateral opening in its side, more effective and/or efficient fluid-based flossing can be provided. For example, the micro-tube is small enough to be able to fit into interdental spaces, and due to having a lateral opening through which fluid can be ejected, fluid can be emitted orthogonally towards an oral surface thereby providing more effective and/or efficient cleaning.

## Description

### FIELD OF THE INVENTION

This invention relates to the field of fluid-based floss systems, and more specifically, to the field of micro-tube apparatuses for use with fluid-based floss systems.

### BACKGROUND OF THE INVENTION

Interdental cleaning is one of the most important aspects for maintaining healthy teeth and gums. Research shows that a lack of interdental cleaning can lead to gum, periodontal, and peri-implant diseases, which have been linked to dental implant failure, heart problems, diabetes and numerous other serious medical issues.

Interdental brushes are recommended by dental professionals as the gold standard for interdental cleaning. An alternative is the use of a fluid-based floss system, such as a water floss or a water pick. These devices push water (or a cleaning fluid) into the interdental space for cleaning.

With fluid-based floss devices, however, it is often difficult to target the fluid into the interdental space which therefore leads to less efficient and/or effective cleaning. Additionally, even when the fluid is reaching the interdental space, it is often hitting the surface at a sub-optimal angle therefore resulting in less effective cleaning.

### SUMMARY OF THE INVENTION

The invention is defined by the claims.

According to examples in accordance with an aspect of the invention, there is provided a micro-tube apparatus for use with a fluid-based floss system.

The micro-tube apparatus comprises: an elongate micro-tube, comprising: one open end; one closed end; at least one lateral opening in a side of the micro-tube; and a fluid communication channel such that the open end is in fluid communication with the at least one lateral opening.

Proposed concepts thus aim to provide schemes, solutions, concept, designs, methods and systems pertaining to a micro-tube apparatus for use with a fluid-based floss system. In particular, embodiments aim to provide a micro-tube apparatus for use with a fluid-based floss system by providing an elongate micro-tube with at least one lateral opening in a side of the micro-tube.

In other words, it is proposed that by providing an elongate micro-tube with at least one lateral opening in its side, more effective and/or efficient fluid-based flossing can be provided. For example, the micro-tube is small enough to be able to fit into interdental spaces, and due to having a lateral opening through which fluid can be ejected, fluid can be emitted orthogonally towards an oral surface thereby providing more effective and/or efficient cleaning.

By providing an elongate micro-tube for use with a fluid-based floss system, e.g., including a fluid jet, fluid can be more precisely targeted at oral surfaces by a user. For instance, the micro-tube can be small enough to fit into tight spaces, for example, an interdental space, and fluid can then be provided to oral surfaces of a user through lateral holes in the micro-tube. For instance, the micro-tube can have multiple holes, i.e., opposite one another, such that two oral surfaces can be cleaned at once, for instance, both teeth either side of an interdental space. In this way, more efficient flossing can be facilitated.

Ultimately, an improved micro-tube apparatus for use with a fluid-based floss system is provided.

In some embodiments, an outer diameter of the micro-tube may be less than 2mm. This facilitates the micro-tube being able to fit into interdental spaces of a user such that they may be cleaned.

In some embodiments, the diameter of the at least one lateral opening may be less than 1mm. This allows the fluid coming out of the lateral opening to be at a beneficial jet velocity.

In some embodiments, the diameter of the at least one lateral opening may be less than 0.75mm. This allows the fluid coming out of the lateral opening to be at a more beneficial jet velocity. In some embodiments, the diameter of the at least one lateral opening may be less than 0.5mm. This allows the fluid coming out of the lateral opening to be at a more beneficial jet velocity.

In some embodiments, the at least one lateral opening may comprise an elliptical shape. This has been found to result, in use, in increased jet velocity.

In some embodiments, the at least one lateral opening may consist of a single lateral opening. This has been found to be a structurally efficient, easy to manufacture, yet still effective embodiment of the present invention.

In some embodiments, the micro-tube apparatus may comprise at least two lateral openings which are on opposite sides of the micro-tube. This allows the micro-tube to simultaneously clean two opposite oral surfaces of a user, for instance, two teeth either side of an interdental space.

In some embodiments, the at least two lateral openings may not be directly opposite one another such that their longitudinal positions along the micro-tube are staggered with respect to one another. This configuration of lateral openings has been found to result in a particularly beneficial jet velocity and flow rate combination for the fluid exiting through the lateral openings in use.

In some embodiments, the at least two lateral openings may have different diameters respectively. This allows the jet velocity and flow rate of the fluid exiting through each lateral opening to be adjusted independently.

In some embodiments, the diameter of each of the at least two lateral openings may increase with distance of the lateral opening from the open end of the micro-tube. This helps compensate for pressure drop as the fluid travels through the fluid communication channel.

In some embodiments, the at least one lateral opening may be situated adjacent the closed end of the micro-tube. For example, this allows the fluid ejected from the lateral opening to reach deep into interdental spaces.

In some embodiments, the fluid communication channel may define a curved inner wall connecting to the at least one lateral hole. This has been found to increase the jet velocity of the fluid exiting the lateral hole compared to, for example, a sharp right-angle bend.

In some embodiments, the micro-tube may comprise at least one of a metal, polymer, and/or glass-fiber. These have all been found to be beneficial materials for comprising the micro-tube.

In some embodiments, the micro-tube may comprise at least three lateral openings equilaterally positioned around the micro-tube. This has been found to be a beneficial configuration of lateral openings.

In some embodiments, the micro-tube may comprise metal, and the micro-tube may further comprise an outer silicon layer. This allows the micro-tube to be structurally strong while also promoting user comfort.

In some embodiments, the longitudinal positions of the at least two lateral holes may be staggered by a length equal to or more than a longitudinal length of each of the at least two lateral holes. This configuration of lateral openings has been found to result in a particularly beneficial jet velocity and flow rate combination for the fluid exiting through the lateral openings in use.

In some embodiments, the at least two lateral openings are directly opposite one another. This configuration of lateral openings has been found to result in a beneficial jet velocity and flow rate combination for the fluid exiting through the lateral openings in use.

In some embodiments, the length of the micro-tube is less than 1cm. This ensures that the pressure drop as the fluid travels through the fluid communication channel is not too great while also allowing a user to more easily orientate and position the micro-tube. The pressure drop corresponds to the pressure a pump of a water-based floss system needs to provide at the open end (inlet) 110. The pressure drop can thus be seen as a cost function of the system.

According to another aspect of the invention, there is provided a fluid-based floss system comprising a fluid jet fluidically connected to a micro-tube apparatus according to any herein disclosed embodiment by the open end of the micro-tube.

In some embodiments, the fluid-based floss system further comprises a detection system configured to detect when the micro-tube is placed within an interdental space of the user, and to active the fluid jet only when the micro-tube is placed within an interdental space of a user. In this way, use of the fluid-based floss system is made more effective and/or efficient.

In some embodiments, the micro-tube may comprise a metal, and wherein the detection system may be configured to detect a conductive connection between the micro-tube and an oral surface of the user. This may provide an effective and/or efficient method of detecting when the micro-tube is in an interdental space.

In some embodiments, the micro-tube may comprise a glass-fiber, and wherein the detection system may be configured to optically detect whether the micro-tube is placed within an interdental space of the user.

In some embodiments, the micro-tube may be mounted on a flexible holder attached to the fluid-based floss system. This facilitates easier use of the micro-tube by a user. In some embodiments, the flexible holder may comprise a spring and/or rubber.

Thus, there may be proposed concepts for a micro-tube apparatus for use with a fluid-based floss system, and this may comprise an elongate micro-tube with at least one lateral opening in its side.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified diagram of a micro-tube apparatus for use with a fluid-based floss system according to a proposed embodiment;
Fig. 2 is a diagram showing a micro-tube apparatus for use with a fluid-based floss system according to a proposed embodiment in use;
Fig. 3 is a diagram of a micro-tube apparatus for use with a fluid-based floss system according to a proposed embodiment;
Fig. 4 is a simplified block diagram of a fluid-based floss system comprising a micro-tube apparatus for use with a fluid-based floss system according to a proposed embodiment;
Fig. 5 is a simplified block diagram of a fluid-based floss system comprising a detection system and a micro-tube apparatus for use with a fluid-based floss system according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to use with a fluid-based floss system. According to proposed concepts, a number of possible solutions may be implemented separately or jointly. That is, although these possible solutions may be described below separately, two or more of these possible solutions may be implemented in one combination or another.

Embodiments of the invention aim to provide a micro-tube apparatus for use with a fluid-based floss system. This can be achieved by providing an elongate micro-tube comprising at least one lateral opening in its side.

Proposed concepts thus aim to provide schemes, solutions, concept, designs, methods and systems pertaining to a micro-tube apparatus for use with a fluid-based floss system. In particular, embodiments aim to provide a micro-tube apparatus for use with a fluid-based floss system by providing an elongate micro-tube with at least one lateral opening in a side of the micro-tube.

In other words, it is proposed that by providing an elongate micro-tube with at least one lateral opening in its side, more effective and/or efficient fluid-based flossing can be provided. For example, the micro-tube is small enough to be able to fit into interdental spaces, and due to having a lateral opening through which fluid can be ejected, fluid can be emitted orthogonally towards an oral surface thereby providing more effective and/or efficient cleaning. In this way, fluid (e.g., water) can be sprayed out of one or more holes in the micro-tube directly within an interdental space such that fluid can reach the surface of the teeth at a steeper angle than conventional water flossing allows.

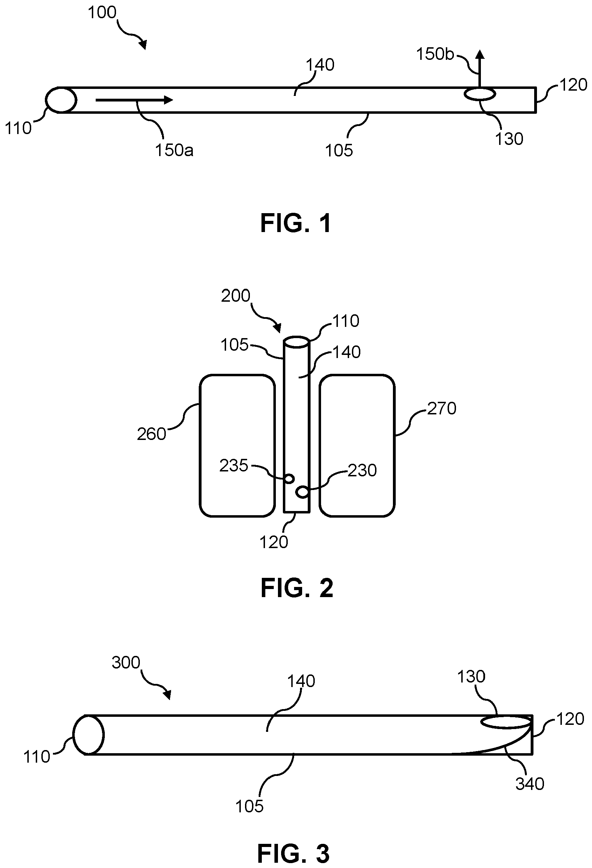

Referring now to Fig. 1, there is depicted a simplified diagram of a micro-tube apparatus 100 for use with a fluid-based floss system according to a proposed embodiment.

For instance, the micro-tube apparatus 100 comprises an elongate micro-tube 105 comprising one open end 110, one closed end 120, at least one lateral opening 130 in a side of the micro-tube 105, and a fluid communication channel 140 such that the open end 110 is in fluid communication with the at least one lateral opening 130.

For example, when the micro-tube apparatus 100 is in use with a fluid-based floss system, fluid can enter through the open end 110, travel through the fluid communication channel 140, as shown by arrow 150a, and then exit out of the lateral opening 130, for instance, orthogonally, as shown by arrow 150b. The fluid communication channel 140 can be understood as a hollow tube within the micro-tube, e.g., defined by the inner wall of the micro-tube 105 (as is the case in this embodiment), or in some embodiments, defined by a separate tube/channel within the micro-tube 105. What is important is that the fluid communication channel 140 is configured to fluidically connect the open end 110 of the micro-tube to the one or more lateral openings 130, and thus, can take any suitable form for this purpose. A lateral opening 130 can be understood as an opening or a hole in a side of the micro-tube 105, i.e., not in one or its ends (i.e.., not in its closed end 120 or, obviously, its open end 110).

It should be noted that the fluid of the fluid-based floss system for which the micro-tube apparatus 100 is configured can comprise, for example, water and/or a cleaning solution and/or any suitable fluid for flossing.

In this embodiment, an outer diameter of the micro-tube 105 is less than 2mm. This facilitates the micro-tube being able to fit into interdental spaces of a user such that they may be cleaned. In other embodiments, however, the outer diameter of the micro-tube 105 can be any suitable size dependent on its intended purpose, for instance, it may be less than 3/4/5mm.

Further, in this embodiment, the diameter of the at least one lateral opening 130 is less than 1mm, less than 0.75mm, and, in fact, less than 0.5mm. These smaller sizes allow the fluid coming out of the lateral opening to remain at a high jet velocity, however, generally at the expense of higher pressure drop across the microtube. In other embodiments, the diameter of the at least one lateral opening 130 can be any suitable size, for instance, only less than 2mm.

In other words, the velocity of the fluid ejecting out of the at least one lateral opening 130 is the target value that is aiming to be optimized with the micro-tube apparatus 100. The reason why is that the higher the velocity of the ejecting fluid, the strong the impact pressure will be on the user's teeth, and thus the better the cleaning will be. This, however, comes at the cost of an increase pressure drop, which corresponds to the pressure which a pump of the fluid-based floss system needs to provide at the open end 110 (inlet) of the micro-tube 105. Thus, the pressure drop can be seen as a cost function in the system. Jet velocity is a preferred value to optimize over flow rate, as flow rate is defined as the product of density multiplied by velocity multiplied by hole surface area. Thus, for a small lateral opening, the fluid may have a low flow rate but still a high jet velocity. Conversely, for a big lateral opening, the flow rate might be high but the jet velocity can be low and thus not suitable for cleaning.

In this embodiment, the at least one lateral opening 130 comprises an elliptical shape. This has been found to result, in use, in increased jet velocity. This is not essential, however, and in other embodiments, the at least one lateral opening 130 can be any suitable shape.

For example, it has been found that an elliptical lateral opening with a small diameter of 1mm and a large diameter of 2mm (in the longitudinal direction of the micro-tube) has been found to provide a beneficial jet velocity. In this embodiment, the elliptical shape of the at least one lateral opening 130 is thus orientated such that the larger diameter of the ellipsis is parallel to the elongation of the micro-tube, e.g., in the longitudinal direction of the micro-tube, e.g., parallel to the fluid communication channel 140.

In this embodiment, the length of the micro-tube is less than 1cm. This ensures that the pressure drop as the fluid travels through the fluid communication channel is not too great while also allowing a user to more easily orientate and position the micro-tube. The pressure drop corresponds to the pressure a pump of a water-based floss system needs to provide at the open end (inlet) 110 to achieve a target jet velocity. The pressure drop can thus be seen as a cost function of the system. This is not essential, however, and in other embodiments, the length of the micro-tube can be greater than 1cm and less than, for example, 2/3/4/5cm.

In this embodiment, the at least one lateral opening 130 consists of a single lateral opening. This has been found to be a structurally efficient, easy to manufacture, yet still effective embodiment of the present invention. In other embodiments, however, the at least one lateral opening 130 can comprise any suitable number of lateral openings.

The use of micro-tubes for fluid-based flossing introduces issues related to the pressure drop caused by the size of the tube, small openings, and the positioning of the openings. For instance, through simulations, it has been found that having a small lateral opening, i.e., in the side of the micro-tube rather than at the end, increases the pressure drop, but is better for cleaning interdental spaces due to the angle at which the fluid is ejected relative to the oral surfaces to-be-cleaned. For instance, connected to a fluid-based flossing system which outputs fluid with pressure of 7.5 bars, a 1cm long micro-tube with an opening at the end of the micro-tube (i.e., at the closed end 120) was found to have a pressure drop of 1.5 bars. On the other hand, a 1cm long micro-tube with a 1mm diameter lateral opening in the side of the micro-tube (adjacent the closed end) was found to have a pressure drop of 4.6 bars; a 1cm long micro-tube with a 0.75mm diameter lateral opening in the side of the micro-tube (adjacent the closed end) was found to have a pressure drop of 5.6 bars; and a 1cm long micro-tube with a 0.5mm diameter lateral opening in the side of the micro-tube (adjacent the closed end) was found to have a pressure drop of 6.4 bars. As described further on, however, these issues can be accounted for and reduced.

Referring now to Fig. 2, there is depicted a diagram showing a micro-tube apparatus 200 according to a proposed embodiment in use. Much like the micro-tube apparatus 100 of Fig. 1, this micro-tube apparatus 200 comprises an elongate micro-tube 105 comprising an open end 110, a closed end 120, and a fluid communication channel 140. In this embodiment, however, the elongate micro-tube 105 comprises at least two lateral openings, 230 and 235, which are on opposite sides of the micro-tube 105. This allows the micro-tube to simultaneously clean two opposite oral surfaces of a user, for instance, two teeth, 260 and 270, either side of an interdental space (the space between the teeth).

In other embodiments, the micro-tube 105 can comprise any suitable number of lateral openings. For instance, the micro-tube may comprise at least three lateral openings equilaterally positioned around the micro-tube. This has been found to be a beneficial configuration of lateral openings.

Adding additional lateral openings has been found to improve cleaning coverage, however, at the expense of a greater pressure drop and a decrease of flow rate. These disadvantages can be mitigated, however, as described below.

Further, in this embodiment, the at least two lateral openings, 230 and 235, are not directly opposite one another such that their longitudinal positions along the micro-tube 105 are staggered with respect to one another. A longitudinal position can be understood as a position along the length of the micro-tube 105, i.e., with no regard for the position around the circumference of the micro-tube, e.g., the radial position. This configuration of lateral openings has been found to result in a particularly beneficial jet velocity and flow rate combination for the fluid exiting through the lateral openings in use.

In other embodiments, however, the at least two lateral openings, 230 and 235, can be directly opposite one another. This configuration of lateral openings has been found to result in a beneficial jet velocity and flow rate combination for the fluid exiting through the lateral openings in use, however, not as much as when the lateral openings are staggered.

Further, in this embodiment, the at least two lateral openings, 230 and 235, have different diameters respectively. This allows the jet velocity and flow rate of the fluid exiting through each lateral opening to be adjusted independently. For example, in this embodiment, the diameter of each lateral opening, 230 and 235, increases with distance of the lateral opening from the open end 110 of the micro-tube 105. This helps compensate for a pressure drop as the fluid travels through the fluid communication channel. In other words, the lateral opening 235 which is closer to the open end 110 of the micro-tube 105 has a smaller diameter than the lateral opening 230 which is further from the open end. In other embodiments, however, this need not be the case, and any suitable relationship between the diameter(s) of the lateral opening(s) and its distance from the open end of the micro-tube can be used.

Specifically, in this embodiment, the longitudinal positions of the at least two lateral openings, 230 and 235, are staggered by a length equal to or more than a longitudinal length of each of the at least two lateral openings. In other words, the longitudinal positions of the at least two lateral openings are staggered by a minimum distance such that the lateral openings do not overlap in longitudinal position at all. This configuration of lateral openings has been found to result in a particularly beneficial jet velocity and flow rate combination for the fluid exiting through the lateral openings in use. This feature is not essential, however, and in other embodiments, the lateral openings can be staggered by any suitable amount, for instance, half their longitudinal lengths.

In this embodiment, the micro-tube comprises at least one of a metal, polymer, and/or glass-fiber. These have all been found to be beneficial materials for comprising the micro-tube. For instance, in some embodiments, the micro-tube 105 can comprise metal (e.g., stainless steel), and the micro-tube can further comprise an outer silicon layer. This allows the micro-tube to be structurally strong while also promoting user comfort. For instance, the stiffness of the metal combined with the small size of the micro-tube could make it prone to puncture a user's gums, and thus the outer silicon can help protect against this. In some embodiments, the outer silicon layer can be added only to the tip of the tube, e.g., a prolongation of the metal tube by a silicon cylinder. A polymer can comprise PTFE.

In embodiments in which the micro-tube only comprises a few lateral openings, e.g., 1-3, a user may have to manually move the micro-tube in order to clean the entire interdental space. In some embodiments, the micro-tube can comprise many lateral openings, e.g., all along its length, such that the user need not have to move the micro-tube but simply insert it into the interdental space and the lateral openings will thus clean all of the interdental space. Generally, however, the more lateral openings are provided in the micro-tube, the lower jet velocity the fluid will have ejecting out of each one, and thus the less effective the cleaning.

Referring now to Fig. 3, there is depicted a diagram showing a micro-tube apparatus 300 according to a proposed embodiment. Much like the micro-tube apparatus 100 of Fig. 1 or 200 of Fig. 2, this micro-tube apparatus 300 comprises an elongate micro-tube 105 comprising an open end 110, a closed end 120, and a fluid communication channel 140. The micro-tube 105 comprises a single lateral opening 130, and in this embodiment, it is situated adjacent the closed end 120 of the micro-tube. This allows the fluid ejected from the lateral opening, for example, to reach deep into interdental spaces.

In this embodiment, the fluid communication channel 140 defines a curved inner wall 340 connecting to the at least one lateral hole 130. This has been found to help increase the jet velocity compared to, for example, a sharp right-angle bend. The fluid communication channel defining a curved inner wall can also be understood as the fluid communication channel defining a curved inner wall such that the curved portion of the inner wall is non-parallel to the immediate outer surface of the micro-tube. For instance, due to the provision of the curved inner wall 340, the fluid flowing through the fluid communication channel 140 is guided towards the lateral opening 130 rather than hitting the closed end 120 of the micro-tube first. This thus increases the jet velocity of the fluid being ejected out of the lateral opening.

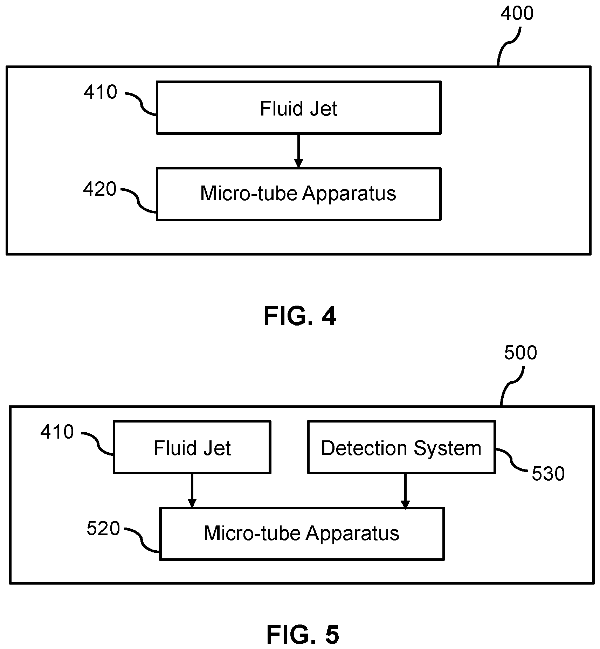

Referring now to Fig. 4, there is depicted a simplified block diagram of a fluid-based floss system 400 comprising a fluid jet 410 fluidically connected to a micro-tube apparatus 420 according to any herein disclosed embodiment (e.g., micro-tube apparatus 100, 200, 300) by the open end of the micro-tube. This thus provides a self-contained system capable of providing more efficient and/or effective fluid-based flossing.

In some embodiments, the micro-tube 420 can be mounted on a flexible holder attached to the fluid-based floss system 400. This is not essential but facilitates easier use of the micro-tube by a user. In some embodiments, the flexible holder can comprise a spring and/or rubber. This can help limit the pressure applied by the user, for instance, to their gums by the micro-tube.

Referring now to Fig. 5, there is depicted a simplified block diagram of a fluid-based floss system 500 comprising a fluid jet 410 fluidically connected to a micro-tube apparatus 520 according to any herein disclosed embodiment by the open end of the micro-tube. The fluid-based floss system 500 further comprises a detection system 530 configured to detect when the micro-tube is placed within an interdental space of the user, and to active the fluid jet only when the micro-tube is placed within an interdental space of a user. In this way, use of the fluid-based floss system is made more effective and/or efficient and the amount of fluid wasted (i.e., not used to clean interdental spaces) is reduced.

In this embodiment, the micro-tube of the micro-tube apparatus 520 comprises a metal (specifically, a conductive metal or, in some embodiments, any other conductive material), and the detection system 530 is configured to detect a conductive connection between the micro-tube and an oral surface of the user. This provides an effective and/or efficient method of detecting when the micro-tube is in an interdental space.

In other words, a conductive connection between the micro-tube and a user's gum/saliva/teeth can be used as a trigger to activate the fluid jet as the connection can indicate that the micro-tube is positioned in the interdental space, and thus contacting an oral surface of the user.

In other embodiments, however, for instance when the micro-tube of the micro-tube apparatus 520 comprises a glass-fiber, the detection system 530 can be configured to optically detect whether the micro-tube is placed within an interdental space of the user. For instance, tube/fiber optics can be used to optically detect if the micro-tube is placed within an interdental space of the user. In some embodiments, a neural network can be trained to detect from light received from the micro-tube whether the micro-tube is placed within an interdental space of the user.

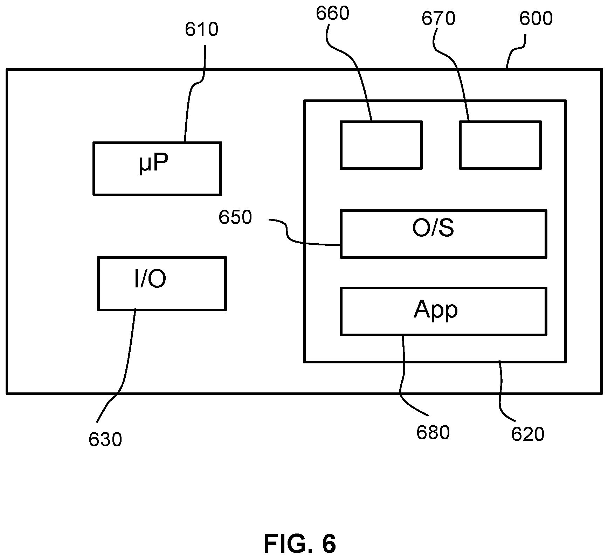

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 800 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The systems of Figs. 4 and 5 may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A micro-tube apparatus (100) for use with a fluid-based floss system, comprising:
an elongate micro-tube (105), comprising:
one open end (110);
one closed end (120);
at least one lateral opening (130) in a side of the micro-tube; and
a fluid communication channel (140) such that the open end is in fluid communication with the at least one lateral opening.

2. The micro-tube apparatus of claim 1, wherein an outer diameter of the micro-tube (105) is less than 2mm.

3. The micro-tube apparatus of any claim 1 or 2, wherein the diameter of the at least one lateral opening (130) is less than 1mm, and preferably less than 0.75mm, and even more preferably less than 0.5mm.

4. The micro-tube apparatus of any prior claim, wherein the at least one lateral opening (130) comprises an elliptical shape.

5. The micro-tube apparatus of any prior claim, wherein the at least one lateral opening (130) consists of a single lateral opening.

6. The micro-tube apparatus of any of claims 1 to 4, wherein the micro-tube apparatus comprises at least two lateral openings (230, 235) which are on opposite sides of the micro-tube.

7. The micro-tube apparatus of claim 6, wherein the at least two lateral openings (230, 235) are not directly opposite one another such that their longitudinal positions along the micro-tube are staggered with respect to one another.

8. The micro-tube apparatus of claim 7, wherein the at least two lateral openings (230, 235) have different diameters respectively, and preferably wherein the diameter of each of the at least two lateral openings increases with distance of the lateral opening from the open end of the micro-tube.

9. The micro-tube apparatus of any prior claim, wherein the at least one lateral opening (130) is situated adjacent the closed end (120) of the micro-tube.

10. The micro-tube apparatus of any prior claim, wherein the fluid communication channel (140) defines a curved inner wall (340) connecting to the at least one lateral hole (130).

11. The micro-tube apparatus of any prior claim, wherein the micro-tube (105) comprises at least one of a metal, polymer, and/or glass-fiber.

12. A fluid-based floss system (400) comprising a fluid jet (410) fluidically connected to a micro-tube apparatus according to any prior claim by the open end of the micro-tube.

13. A fluid-based floss system of claim 12, further comprising a detection system (530) configured to detect when the micro-tube is placed within an interdental space of the user, and to activate the fluid jet (410) only when the micro-tube is placed within an interdental space of a user.

14. The fluid-based floss system of claim 13, wherein the micro-tube comprises a metal, and wherein the detection system (530) is configured to detect a conductive connection between the micro-tube and an oral surface of the user.

15. The fluid-based floss system of claim 13, wherein the micro-tube comprises a glass-fiber, and wherein the detection system (530) is configured to optically detect whether the micro-tube is placed within an interdental space of the user.
